# EUROPEAN PATENT SPECIFICATION

(11) **EP 3 515 837 B1**
(45) Date of publication and mention of the grant of the patent: **30.06.2021**
(21) Application number: 18822615.3
(22) Date of filing: 28.06.2018
(51) Int. Cl.: B65D 81/20, B65D 81/22, B65D 81/24, A23L 3/02, A23L 19/20

(54) **FOOD CONTAINER AND METHOD FOR PRODUCING**
LEBENSMITTELBEHÄLTER UND HERSTELLUNGSVERFAHREN
RÉCIPIENT ALIMENTAIRE ET PROCÉDÉ DE FABRICATION

(30) Priority: 28.06.2017 GB 201710334
(43) Date of publication of application: 31.07.2019
(73) Proprietor: Marcatus Qed Inc., Toronto, Ontario M6K 1X1 (CA)
(72) Inventor: SHARKEY-PEARCE, Jacob, Toronto Ontario M6K 1X1 (CA)
(74) Representative: Roos, Peter
(86) International application number: PCT/CA2018/050800
(87) International publication number: WO 2019/000099

(56) References cited:
- WO-A1-94/24877
- WO-A1-2017/051165
- CA-A1- 2 793 587
- FR-A1- 2 704 840
- US-A1- 2011 217 435
- US-A1- 2015 072 051
- US-A1- 2017 036 791
- US-A1- 2017 036 791
- US-B2- 8 114 452

## Description

The present invention relates to a container holding preserved pickled food and a process for producing a container of preserved food.

One of the main aims of the present invention is to improve the shelf-stability of pickled foods and provide them in convenient packaging. The preservation of pickled food can be a complex task dependent upon many factors. To-date, efforts at preserving certain foods have suffered various drawbacks. These have included messy or inconvenient packaging, the use of artificial preservatives and poor shelf stability necessitating refrigeration in order for the food to remain viable. Furthermore, when using pre-existing methods and apparatus, it is easy for important textural qualities of the product, such as the food's crunchiness, to be lost during transport and storage. Document WO 94/24877 A1 discloses a container containing pickled food according to the preamble of claim 1. The present invention aims to reduce the mess associated with eating pickled foods from traditional containers. It is a further desired aim to improve the shelf life of such foods ideally without the use of artificial preservatives.

According to a first aspect of the invention there is provided a vacuum sealed, container containing preserved pickled food, the container comprising:
- at least one foil wall formed from a flexible foil and defining a chamber;
- pickled food within the chamber; and
- brine, in which the food is immersed, and which fills the chamber when the chamber is sealed,
wherein the ratio of brine to pickled food by mass is in the range 1:2.5 to 1:5.

The container may be a pouch formed from one or more foil wall. A single sheet of foil may be formed into a pouch by joining edges as required. A pouch may be formed from a plurality of discrete panels, that may be bonded to each other using a suitable bonding method (such as welding or adhesive). A bonding agent may be selected from any suitable adhesives, and welding can use any appropriate techniques such as heat or ultrasonic welding.

The wall or panels of the container may be formed from a single layer of foil. Alternatively, they preferably comprise laminated foils having at least one foil layer and at least one other layer formed from a plastics material such as Polyester (PET), Polypropylene (PP), and Polyethylene (PE). Not all the plurality of panels need be the same thickness to each of the others. Different parts of the container may be formed of different materials. The foil may comprise or include aluminium foil. Other metallic foils can be suitable.

The container may have a partially transparent window providing visibility of the contents of the container. There may be more than one such window. A window may be provided in one or more wall of the container. The window may be configured to block or significantly reduce the transmission of ultraviolet light therethrough.

In order to reduce the pathogen count, and thus prolong the contained food's shelf life, the containers of the present invention may be pasteurised. The pasteurisation can be performed via tunnel pasteurisation. Due to foil's excellent heat conductivity, the use of a foil in the wall of the container can enable more efficient heat transfer from the exterior to the container's contents, and therefore enables the containers to be pasteurised using less energy. This therefore allows the pasteurisation step to take less time for a given heat energy output from a pasteuriser.

Foil can also act effectively as an insulator against incident electromagnetic (EM) radiation. Therefore, the use of a foil wall for the container may prevent transmission of a significant proportion of ultraviolet (UV) light from the container's surroundings to its contents, UV light which would otherwise degrade the contained food.

By vacuum sealing the internal volume of the container is reduced (when sealed) such that the container only contains pickled food immersed in the brine. This is whilst still maintaining a low amount of brine relative to food. Regardless of the orientation of the container, there is no opportunity for the contained food to be exposed to drying or degrading atmospheric gas during the container's transport and/or storage. The absence of contained gas also prevents any associated heat insulating effect, thus permitting more efficient heat transfer during pasteurisation of the container. Additionally, brine is a natural preservative which ensures the pickled food can be preserved within the container without the need for energy and resource-intensive refrigeration, whilst maintaining the food's viability and desirable textural qualities. Finally, the flexibility of the container permits more versatile and efficient packing arrangements, combined with a lower risk of container rupture.

When the flexible package of the present invention is opened the removal of the vacuum causes the chamber to expand and the level of brine to drop. This ensures that a user is not at risk of spilling the brine in the process of opening or removing the contents for consumption.

Preferably, the ratio of brine to pickled food by mass is in the region of 1:4. Such a ratio has been found to maximise the quantity of pickled food which can be contained within a brine-filled container without sacrificing the shelf-life of the food. The 1:4 ratio also enables a relatively small quantity of brine to be used, such that the risk of mess or spillage to the consumer upon opening the container is significantly reduced. A further advantage of the low brine to food ratio is to ensure there is only a relatively low quantity of brine within the container to heat during the pasteurisation step, which significantly lowers pasteuriser energy requirements since the contents of the container require less time to reach pasteurisation temperature. Additionally, due to the relatively low brine volume, the volume of a container of a given quantity of pickled food is substantially decreased (and is also lower in weight), thus reducing associated shipping and storage volumes and costs.

The volumetric capacity of the container, in terms of the container's food and brine content, may ideally be in the range 50ml to 2000ml. The mass capacity of the container, in terms of the container's combined food and brine content, may be in the range 50g to 2000g.

The pickled food within the container may be cut, sliced or generally shaped by a cutting operation. The cutting operation may result in the formation of pickled food generally in the form of chips, wholes and/or spears. The pickled food preserved in the container may comprise Low Acid Canned Food (LACF). The pickled food preserved in the container may comprise one or a mixture of one or more of cucumbers, carrots, celery, peppers, beets, beans, cauliflower, olives, onions, or other additional vegetables.

To open the container prior to use of the food, the foil may be cut. The container may further include means for aiding rupture of the wall of the container to open the chamber to provide access to the chamber and contained food. Such a means provides a consumer with easier access to the pickled food. This could be a simple notch to aid tearing but could take other forms as are known in the art.

The container may comprise a re-closable opening means. This has the advantage of permitting a user to reseal the container after opening and thus can prolong the viability of the contents of an opened container. Further preferably, the re-closable opening means may comprise a sliding fastener. Sliding fasteners can significantly lower the effort associated with closing a container as compared with other re-closable opening means, for instance press fasteners. Sliding fasteners can also reduce the risk of accidentally leaving a section of the opening means open to the surroundings which could result in spillage or spoilage of the container's contents. The sliding fastener may be a pressure sensitive sliding fastener. The pressure sensitive sliding fastener may be a pressure sensitive zipper seal.

The container may comprise a gusseted package. The construction of gusseted package can enable them to be particularly robust, thus withstanding significant internal and external pressures and therefore ensuring a secure container for the brine and pickled food. The gusseted package may define a self-standing configuration. Such a self-standing package can enable the container to stand self-supported upon a surface, and therefore enables more efficient stacking arrangements to be used, for instance in shops, whilst also being able to provide a strong visual impact to a potential consumer. The package may be configured to open at a region remote from the gusset. The nature of the gusset may tend to hold the package open when not sealed. The gusseted package as described above may be a gusseted pouch. The container may alternatively comprise other shapes such as stand-up pouches, or a substantially flat pillow-shaped configuration.

A specific construction of the container may comprise a stand-up gusseted pouch having a wall formed from bonded layers of film, there being layers each of Polyethylene Terephthalate (PET), Biaxially Orientated Polyamide (BOPA), Aluminium foil and Polyethylene (PE). They may ideally be in this order. The Polyethylene Terephthalate (PET) may be 0.012 millimetre thick, the Biaxially Orientated Polyamide (BOPA) 0.015 millimetre thick, the Aluminium foil 0.009 millimetre thick and the Polyethylene (PE) 0.080 millimetre thick. The pouch may have a width of 110 millimetres, a height of 140 millimetres and a round bottom gusset having a width of 40 millimetres and a depth of 40 millimetres. The stand-up gusseted pouch may have a re-closable opening means in the form of a sliding fastener, the sliding fastener being a zipper. The stand-up gusseted pouch may display a custom printed exterior surface, and the printing effect may be a matte finish or a shine finish. The front and back of the gusset may also be printed upon.

The brine may have a pH in the range of 2.2 to 4.2. Preferably, the brine has a pH in the range of 3.4 to 4.2. More preferably, the brine has a pH in the range of 3.4 to 3.9. The pH is the value of the finished product once stabilised - i.e. after combination and sufficient time for reaction with the foods product. The pH of the brine may change after introduction to the food due for example to the production of acid.

The brine may comprise only FDA Class 1 natural preservatives. The brine when introduced into the chamber may comprise salt and water. It may further be an acidic brine, for example containing acetic acid. The brine may comprise vinegar. The brine may be substantially free from artificial preservatives. The brine filling the chamber may comprise, water, vinegar, salt and optionally one or more of sugar, calcium chloride and flavouring.

The flavourings may include one or some combination of: dill, dill pickle spice, bay leaf, caramelised onion, onion, acidified onions, mustard seed, mustard seed bloomed in vinegar.

One preferred brine formulation filling the chamber may comprise prior to introduction to the chamber the following:
- water;
- vinegar;
- salt;
- calcium chloride; and
- optionally, sugar and/or flavouring.

Further preferably, the brine formulation filling the chamber may comprise prior to introduction to the chamber the following:
- 47 - 70% by weight water;
- 8 - 14% by weight vinegar;
- 5 - 6% by weight salt;
- 0.27 - 0.35% by weight calcium chloride;
- 12 - 28% by weight sugar; and
- optionally 0.12 - 0.37% by weight flavouring.

According to a second aspect of the invention, there is provided a method for producing a vacuum sealed, container containing preserved pickled food, the method comprising:
a. providing a container formed from at least one flexible foil wall defining a chamber having an opening;
b. introducing a food into the chamber through the opening;
c. introducing brine into the chamber through the opening;
d. flushing the chamber with Nitrogen gas;
e. imparting a vacuum to the chamber such that the chamber is substantially wholly filled by the brine and the food;
f. sealing the chamber by closing the opening of the container; and
g. pasteurising the container,
wherein the ratio of brine to pickled food by mass after sealing is in the range 1:2.2 to 1:5.

The invention further provides a container of food as described above produced by the method as described herein.

The method may include the preliminary step of preparing that food. Where the food to be introduced into the chamber is already semi-preserved, there may be a wash out step. The wash out may last up to 24 hours. It may also include washing or cutting operations applied to the food. The cutting operation may be a peeling, chopping or slicing operation. Food once prepared is introduced into the chamber in batches by a suitable metering method.

Brine is prepared to an appropriate formulation as discussed elsewhere in this specification. The formulation may vary dependent on the type, quantity and configuration (e.g. sliced or whole) of food to be pickled and the flavour to be imparted. The brine is introduced as a liquid to the chamber in suitably metered amounts. This can be before, along with or after the food is introduced.

Once the food and brine are in the chamber it is subjected to a vacuum to draw out the remaining gas and draw in the walls of the chamber to reduce the volume thereof. This can be achieved in various ways, such as a suction pump being fluidly connected to the opening on the container. Once the chamber has been evacuated it can be sealed in an appropriate way. For example, once the vacuum is drawn, parts of the foil walls (usually those adjacent the opening) may be bonded to each other to form a seal. This bonding may be by suitable means such as adhesive or welding.

Preferably, steps (a) to (d) of the method are carried out within an atmosphere of Nitrogen gas. This ensures a minimal exposure to oxygen to reduce associated degradation.

The amount of brine and food introduced is such that the ratio of brine to pickled food by mass after sealing is in the range of 1:2.5 to 1:5. Further preferably, the ratio of brine to pickled food by mass after sealing is substantially 1:4.

The pasteurisation step may be a continuous process or a batch process. A plurality of containers may be simultaneously pasteurised. Preferably, pasteurisation of the container is performed by conveying the container through a tunnel pasteuriser. The pasteurisation step may include a plurality of sequential stages. The plurality of sequential stages may comprise an initial warm-up stage, in which the container is brought up from ambient temperature to a pasteurisation temperature. During the initial warm-up stage, the rate of temperature change with time may be linear or non-linear. The initial warm-up stage may bring the container from ambient temperature to a pasteurisation temperature of between 76°C and 77°C. Preferably the pasteurisation temperature is 76°C. The time taken to bring the container from ambient temperature to pasteurisation temperature may be between 25 minutes and 40 minutes.

During the pasteurisation stage the container is held at a pasteurisation temperature for a pasteurising time period to significantly reduce the pathogen count of the container's contents. The pasteurising time period may be between 1 minute and 3 minutes. Preferably the pasteurising time period may be between 1 min 50 - 2 min 10 seconds. More preferably the pasteurising time period is no more than two minutes.

The plurality of sequential stages may further comprise a cooling stage, in which the container is cooled from pasteurisation temperature to a target cooled temperature over a cooling time period. The target cooled temperature may be less than 10°C. The cooling time period may be in the range 3 minutes to 10 minutes. Preferably the cooling time period is 7 minutes. During the cooling stage, the rate of temperature change with time may be linear or non-linear.

The configuration of the pasteurisation step may depend upon the contents of the container. For example, where the container contains food in the form of whole pickles, the pasteurisation temperature may be 76 °C and the hold time may be 120 seconds. Alternatively, where the container contains food in the form of cut pickles, such as chips and spears, then the pasteurisation temperature may be 76 °C and the hold time may be 120 seconds.

It will be appreciated that the features disclosed with respect to the container according to a first aspect of the present invention could apply equally well to the method of the present invention.

In order that it be better understood, but by way of example only, the present invention will now be described with reference to the accompanying drawings in which:
**Figure 1** is an external side view of a container in accordance with a first aspect of the present invention;
**Figure 2** shows a cross-sectional view of the container of Figure 1, taken through line A-A; and
**Figure 3** is a flow diagram depicting a process in accordance with a second aspect of the present invention.

In the drawings, like parts are denoted by like reference numerals.

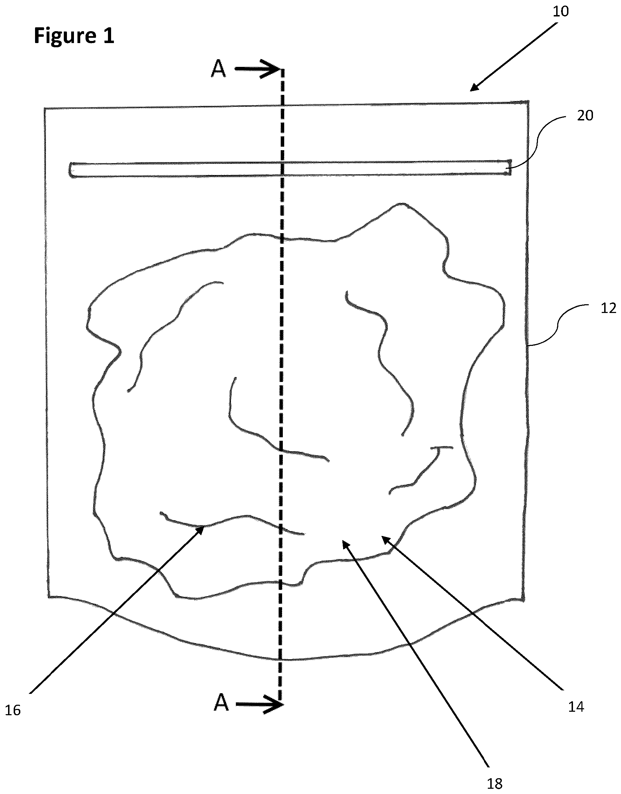

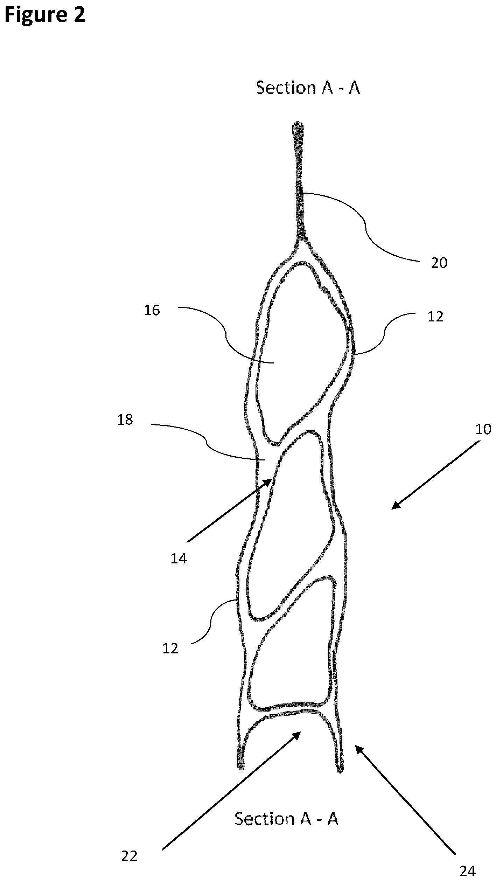

Figure 1 shows a side view of a container, generally indicated 10, in accordance with a first aspect of the present invention. The container comprises foil walls, 12, defining a chamber, generally indicated 14 (and shown more clearly in Figure 2). The foil walls are formed from a multilayer laminate. The container further contains pickled food, generally indicated 16 (and shown more clearly in Figure 2) within the chamber 14 and brine, generally indicated 18 (and shown more clearly in Figure 2) in which the items of a food 16 are immersed. In this embodiment, the food shown represents sliced gherkin but any pickleable food is acceptable. The brine and foods fill the chamber 14 when the chamber 14 is vacuum sealed. Within the chamber 14 either when sealed or not, the ratio of brine 18 to pickled food 16 by mass is approximately 1:4. The upper end of the container 10 is closed after filing. A re-closable sliding seal 20 can be used to access the contents of the chamber.

Figure 2 shows a cross-sectional view of the container 10 of Figure 1, taken through line A-A. Illustrated also is the pickled food 16 within the chamber 14 (generally indicated), and the brine 18 in which the food 16 is immersed. The container 10 comprises a gusseted package, with the gusset, generally indicated 22, formed about a lower end, generally indicated 24, of the container 10. The gusseted package defines a self-standing configuration. The seal 20, which seals the chamber 14 is also shown in Figure 2.

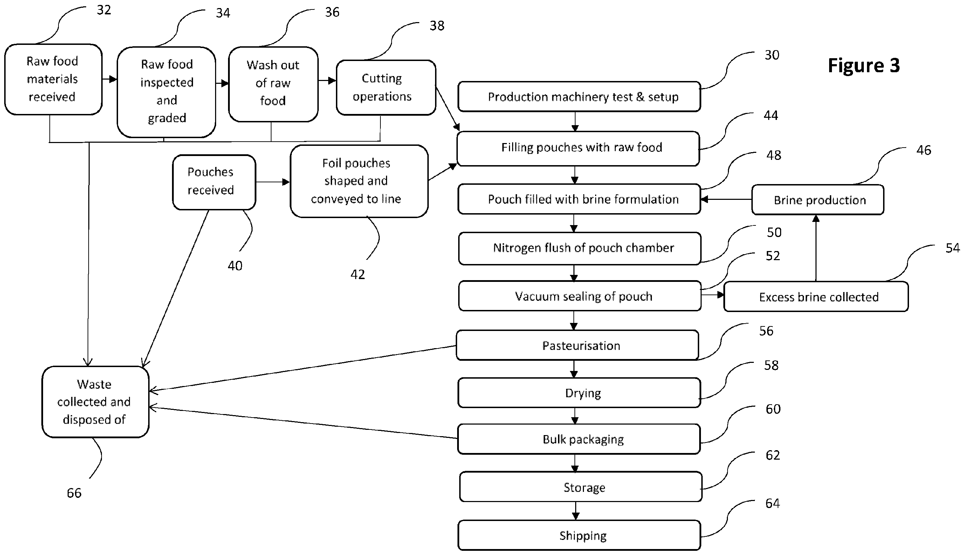

Figure 3 shows a flow diagram depicting a process in accordance with the method of the second aspect of the present invention. The process is for the production of a vacuum-sealed container, in this case a foil-based gusseted pouch, for containing pickled cucumbers in brine. The initial stage 30 involves the testing of the machinery to be used during the production of the gusseted pouch. During this stage 30, the machinery employed is tested to ensure it is fully operational and the specific requirements of the machinery are set up to suit the dimensions of the pouch being utilised. For example, the volumetric filling quantity of brine for each gusseted pouch is specified on a vacuum filler machine and the necessary bars of pressure required to produce an effective vacuum seal, according to the size and construction of pouch utilised, is specified on a vacuum sealer machine.

A number of stages, 32 to 38, involving the receiving and preparation of the cucumbers are then then carried out in series. At stage 32 the raw food materials, in this case cucumbers, are received preservative-free in barrels, in either vinegar or salt-based brine media, having a drained weight of between 170 and 185kg. At stage 34, the raw cucumbers are inspected and graded according to size and any detected defects. At stage 36 the cucumbers are then washed in order to de-brine the cucumbers. The wash involves soaking the cucumbers in water and may take between 12 and 24 hours, and the water may be changed for fresh water at least once during stage 36. At stage 38, the cucumbers are cut, by hand, to produce desired shapes. There may be no cutting operation applied, in which case the cucumbers are left whole and intact, or the cucumbers may be cut into chips or spears. The output of stage 38 results in cucumber material of the desired size and shape. Where the food to be introduced into the chamber differs from cucumbers, for instance carrots or peppers, differing cutting operations may be applied, for example resulting in the production of half-moon shapes, strips or squares, or the food may be diced.

As can be seen from Figure 3, steps 40 and 42 occur alongside stages 32 to 38. At stage 40, the foil-based gusseted pouches are received printed with desired artwork and the pouches are inspected for defects. The pouches in this specific example have a wall formed from bonded layers of film, there being layers each of Polyethylene Terephthalate (PET; 0.012 millimetre thick), Biaxially Orientated Polyamide (BOPA; 0.015 millimetre thick), Aluminium foil (0.009 millimetre thick) and Polyethylene (PE; 0.080 millimetre thick), the layers arranged in this order. The Polyethylene Terephthalate would normally comprise the layer innermost with respect to the chamber. The wall defines a chamber of the pouch, the chamber having an opening for the introduction of cucumbers and brine. The pouches have a width of 120mm, a height of 150mm and round bottom gusset having a width of 40mm and a depth of 40mm. The stand-up gusseted pouches have a re-closable opening means in the form of a sliding fastener. The stand-up gusseted pouches display a custom printed exterior surface, with the front and back of the gusset printed upon also.

At stage 42, the gusseted pouches are shaped to receive the cucumber material and brine more efficiently, which involves at least ensuring the opening is fully open.

At stage 44, the results of stages 38 and 42 are brought together on the production line, such that the gusseted pouches are filled with the cucumber material. This stage 44 is undertaken by hand, wherein workers first perform a secondary inspection to remove any cucumber material showing defects; then fill each gusseted pouch with the resulting cucumber material; and then weigh the resulting gusseted pouches and add or remove cucumbers to meet the target weight with a tolerance of 2 grams +/-. Although done by hand in this example it could be automated.

Separately, the specific brine formulation is prepared at stage 46. This stage begins by assembling/receiving the raw brine materials of the brine formulation to be used with the cucumbers. In the present example these include water, 20% acetic acid vinegar, calcium chloride, salt, white granulated sugar and appropriate flavours, comprised of bay leaf, caramelised onion flavour and onion flavour. The raw brine materials are then mixed in the appropriate ratios until dissolved before being loaded into the vacuum filler machine.

At stage 48, the vacuum filler machine is used to introduce the brine formulation resulting from stage 46 into the pouches. In this example three such gusseted pouches are filled simultaneously. Subsequently, at stage 50, each gusseted pouch is conveyed to the vacuum chamber wherein the chamber is flushed with Nitrogen gas. Thereafter, at stage 52, a vacuum is imparted to the chamber such that the chamber compresses until it is substantially wholly filled by the brine formulation and the cucumber. The chamber is then sealed by closing the opening of the container and bonding the walls together. The ratio of brine to cucumber by mass after sealing is substantially 1:4. At stage 54, any excess brine coming out of the chamber resulting from the process of vacuum sealing the chamber of the pouch 52 is recycled into the brine production stage 46, to be used with a later gusseted pouch.

The vacuum sealed gusseted pouch is then conveyed to the tunnel pasteuriser, wherein, at stage 56, pasteurisation of the gusseted pouch is performed. This process 56 begins as the temperature of the gusseted pouch is brought up from ambient temperature to 76°C over the course of forty minutes, the temperature then being held at a constant pasteurising temperature 76°C for a pasteurising time period of between 1 and 3 minutes, and finally the pouch's temperature is lowered to less than 10°C over the course of sixty minutes.

A plurality of gusseted pouches may be simultaneously pasteurised as just described, for instance ten such pouches. Upon exiting the tunnel pasteuriser, with the temperature of the pouch less than 10°C, at stage 58, the exterior of the pouch is then dried as it is conveyed through a forced air-drying tunnel.

At stage 60, bulk packaging is undertaken. This involves a primary packaging step of packing a plurality of pouches resulting from stage 58 into display-ready cartons, a secondary packaging step of packing a plurality of such cartons into a box and a tertiary packaging stage of packing a plurality of such boxes onto a pallet.

At stage 62, the results of the bulk packaging step 60 are then moved to a storage facility, which facility may be refrigerated, whereafter at stage 64, the packaged product is shipped to further destinations, within shipping containers or by other means.

At stage 66, waste collected from stages 32 to 38 (such as cucumbers with defects or unwanted offcuts from a cutting operation), stage 40 (such as pouches found defective upon inspection), stage 56 (such as waste pasteurisation water) and stage 60 (such as waste elements of packing) are sorted and disposed of appropriately.

The nature of certain process parameters including times, temperatures, pouch sizes, brine formulation may vary slightly dependent on the process nature of the food and the end product parameters.

## Claims

1. A vacuum sealed, container (10) containing preserved pickled food (16), the container (10) comprising:
- at least one foil wall (12) formed from a flexible foil and defining a chamber (14);
- pickled food (16) within the chamber (14); and
- brine (18), in which the food (16) is immersed, and which fills the chamber (14) when the chamber (14) is sealed,
**characterized in that** the ratio of brine (18) to pickled food (16) by mass is in the range 1:2.5 to 1:5.

2. A container (10) as claimed in claim 1, wherein the ratio of brine (18) to pickled food (16) is substantially 1:4.

3. A container (10) as claimed in any of the preceding claims, wherein the container (10) includes a means for rupturing the wall of the container (10) to open the chamber (14) to provide access to the chamber (14) and contained food (16).

4. A container (10) as claimed in any preceding claim, wherein the container (10) comprises a re-closable opening means.

5. A container (10) as claimed in claim 4, wherein the re-closable opening means comprises a sliding fastener (20).

6. A container (10) as claimed in any of the preceding claims, wherein the container (10) comprises a gusseted (22) package or a substantially flat pillow-shaped configuration.

7. A container (10) as claimed in claim any of the preceding claims, wherein the brine (18) within the sealed chamber (14) comprises the following:
- water;
- vinegar;
- salt;
- calcium chloride; and
- optionally, sugar and/or flavouring.

8. A container (10) as claimed in claim 7, wherein the brine (18) comprises the following:
- 47 - 70% by weight water;
- 8 - 14% by weight vinegar;
- 5 - 6% by weight salt;
- 0.27 - 0.35% by weight calcium chloride;
- 12 - 28% by weight sugar; and
- optionally 0.12 - 0.37% by weight flavouring.

9. A container (10) as claimed in claim 7 or claim 8 wherein the brine (18) is substantially free from artificial preservatives.

10. A method for producing a vacuum sealed, container (10) containing preserved pickled food (16) according to claim 1, the method comprising:
a. providing (42) a container (10) formed from at least one flexible foil wall (12) defining a chamber (14) having an opening;
b. introducing (44) a food (16) into the chamber (14) through the opening;
c. introducing (48) brine (18) into the chamber (14) through the opening;
d. flushing (50) the chamber (14) with Nitrogen gas;
e. imparting (52) a vacuum to the chamber (14) such that the chamber (14) is substantially wholly filled by the brine (18) and the food (16);
f. sealing (52) the chamber (14) by closing the opening of the container (10); and
g. pasteurising (56) the container (10),
wherein the ratio of brine (18) to pickled food (16) by mass after sealing (52) is in the range 1:2.5 to 1:5.

11. A method as claimed in claim 10, wherein steps a to d of the method are carried out within a Nitrogen atmosphere.

12. A method as claimed in claim 11, wherein the ratio of brine (18) to pickled food (16) by mass after sealing (52) is substantially 1:4.

13. A method as claimed in any of claims 10 to 12, wherein pasteurising (56) the container (10) is performed by conveying the container (10) through a tunnel pasteuriser.

14. A method as claimed in any of claims 10 to 13, wherein during the pasteurisation stage (56), the container (10) is held at a pasteurisation temperature for a pasteurising time period and the duration of the pasteurising time period is no greater than two minutes.

## Patentansprüche

1. Vakuumversiegelter Behälter (10), der ein konserviertes, eingelegtes Lebensmittel (16) enthält, wobei der Behälter (10) aufweist:
- mindestens eine Folienwand (12), die aus einer flexiblen Folie gebildet ist und eine Kammer (14) definiert,
- ein eingelegtes Lebensmittel (16) innerhalb der Kammer (14), und
- Lake (18), in die das Lebensmittel (16) eingetaucht ist und die die Kammer (14) füllt, wenn die Kammer (14) versiegelt wird,
**dadurch gekennzeichnet, dass** das Massenverhältnis von Lake (18) zu eingelegtem Lebensmittel (16) im Bereich von 1:2,5 bis 1:5 liegt.

2. Behälter (10) nach Anspruch 1, wobei das Verhältnis von Lake (18) zu eingelegtem Lebensmittel (16) etwa 1:4 beträgt.

3. Behälter (10) nach einem der vorhergehenden Ansprüche, wobei der Behälter (10) ein Mittel zum Auftrennen der Wand des Behälters (10) aufweist, um die Kammer (14) zu öffnen, um einen Zugang zur Kammer (14) und dem darin enthaltenen Lebensmittel (16) zu ermöglichen.

4. Behälter (10) nach einem der vorhergehenden Ansprüche, wobei der Behälter (10) eine wiederverschließbare Öffnungseinrichtung aufweist.

5. Behälter (10) nach Anspruch 4, wobei das wiederverschließbare Öffnungsmittel einen Schiebeverschluss (20) aufweist.

6. Behälter (10) nach einem der vorhergehenden Ansprüche, wobei der Behälter (10) eine Seitenfaltenpackung (22) oder eine im Wesentlichen flache kissenförmige Konfiguration aufweist.

7. Behälter (10) nach einem der vorhergehenden Ansprüche, wobei die Lake (18) innerhalb der versiegelten Kammer (14) folgendes umfasst:
- Wasser,
- Essig,
- Salz,
- Kalziumchlorid, und
- optional Zucker und/oder Aromastoffe.

8. Behälter (10) nach Anspruch 7, wobei die Lake (18) folgendes umfasst:
- 47 - 70 Gew.-% Wasser,
- 8 - 14 Gew.-% Essig,
- 5 - 6 Gew.-% Salz,
- 0,27 - 0,35 Gew.-% Kalziumchlorid,
- 12 - 28 Gew.-% Zucker, und
- optional 0,12 - 0,37 Gew.-% Aromastoffe.

9. Behälter (10) nach Anspruch 7 oder Anspruch 8, wobei die Lake (18) im Wesentlichen frei von künstlichen Konservierungsstoffen ist.

10. Verfahren zur Herstellung eines vakuumversiegelten Behälters (10), der ein konserviertes, eingelegtes Lebensmittel (16) enthält, nach Anspruch 1, wobei das Verfahren umfasst:
a. Bereitstellen (42) eines Behälters (10), der aus mindestens einer flexiblen Folienwand (12) gebildet ist, die eine Kammer (14) mit einer Öffnung definiert,
b. Einbringen (44) eines Lebensmittels (16) in die Kammer (14) durch die Öffnung,
c. Einbringen (48) von Lake (18) in die Kammer (14) durch die Öffnung,
d. Spülen (50) der Kammer (14) mit Stickstoffgas,
e. Anlegen (52) eines Vakuums an die Kammer (14), so dass die Kammer (14) im Wesentlichen vollständig durch die Lake (18) und das Lebensmittel (16) gefüllt ist,
f. Versiegeln (52) der Kammer (14) durch Schließen der Öffnung des Behälters (10), und
g. Pasteurisieren (56) des Behälters (10),
wobei das Massenverhältnis von Lake (18) zu eingelegtem Lebensmittel (16) nach dem Versiegeln (52) im Bereich von 1:2,5 bis 1:5 liegt.

11. Verfahren nach Anspruch 10, wobei die Schritte a bis d des Verfahrens unter Stickstoffatmosphäre durchgeführt werden.

12. Verfahren nach Anspruch 11, wobei das Massenverhältnis von Lake (18) zu eingelegtem Lebensmittel (16) nach dem Versiegeln (52) etwa 1:4 beträgt.

13. Verfahren nach einem der Ansprüche 10 bis 12, wobei das Pasteurisieren (56) des Behälters (10) durch Befördern des Behälters (10) durch einen Tunnel-Pasteurisierer durchgeführt wird.

14. Verfahren nach einem der Ansprüche 10 bis 13, wobei während der Pasteurisierungsphase (56) der Behälter (10) für eine Pasteurisierungszeitspanne auf einer Pasteurisierungstemperatur gehalten wird und die Dauer der Pasteurisierungszeitspanne nicht größer als zwei Minuten ist.

## Revendications

1. Récipient (10) scellé sous vide contenant un aliment saumuré conservé (16), le récipient (10) comprenant :
- au moins une paroi en feuille (12) formée à partir d'une feuille flexible et définissant une chambre (14) ;
- un aliment saumuré (16) à l'intérieur de la chambre (14) ; et
- une saumure (18), dans laquelle l'aliment (16) est immergé, et qui remplit la chambre (14) lorsque la chambre (14) est scellée,
**caractérisé en ce que** le rapport en masse entre la saumure (18) et l'aliment saumuré (16) est dans la gamme de 1:2,5 à 1:5.

2. Récipient (10) selon la revendication 1, dans lequel le rapport entre la saumure (18) et l'aliment saumuré (16) est d'environ 1:4.

3. Récipient (10) selon une des revendications précédentes, dans lequel le récipient (10) comprend un moyen pour rompre la paroi du récipient (10) afin d'ouvrir la chambre (14) pour permettre l'accès à la chambre (14) et à l'aliment contenu (16).

4. Récipient (10) selon une des revendications précédentes, dans lequel le récipient (10) comprend un moyen d'ouverture refermable.

5. Récipient (10) selon la revendication 4, dans lequel le moyen d'ouverture refermable comprend une fermeture coulissante (20).

6. Récipient (10) selon une des revendications précédentes, dans lequel le récipient (10) comprend un emballage à soufflet (22) ou une configuration en forme de coussin sensiblement plat.

7. Récipient (10) selon une des revendications précédentes, dans lequel la saumure (18) à l'intérieur de la chambre scellée (14) comprend les éléments suivants :
- eau ;
- vinaigre ;
- sel ;
- chlorure de calcium ; et
- éventuellement, sucre et/ou arômes.

8. Récipient (10) selon la revendication 7, dans lequel la saumure (18) comprend les éléments suivants :
- 47 à 70 % en poids d'eau ;
- 8 - 14% en poids de vinaigre ;
- 5 à 6 % en poids de sel ;
- 0,27 - 0,35% en poids de chlorure de calcium ;
- 12 à 28% en poids de sucre ; et
- éventuellement 0,12 à 0,37% en poids d'arômes.

9. Récipient (10) selon la revendication 7 ou la revendication 8, dans lequel la saumure (18) est sensiblement sans conservateurs artificiels.

10. Procédé de fabrication d'un récipient scellé sous vide (10) contenant un aliment saumuré conservé (16) selon la revendication 1, le procédé comprenant :
a. fournir (42) un récipient (10) formé d'au moins une paroi en feuille flexible (12) définissant une chambre (14) ayant une ouverture ;
b. introduire (44) un aliment (16) dans la chambre (14) à travers l'ouverture ;
c. introduire (48) une saumure (18) dans la chambre (14) à travers l'ouverture ;
d. rincer (50) la chambre (14) avec de l'azote gazeux ;
e. appliquer (52) un vide à la chambre (14) de telle sorte que la chambre (14) soit sensiblement entièrement remplie par la saumure (18) et par l'aliment (16) ;
f. sceller (52) la chambre (14) en fermant l'ouverture du récipient (10) ; et
g. pasteuriser (56) le récipient (10),
dans lequel le rapport en masse entre la saumure (18) et l'aliment saumuré (16) après scellement (52) est dans la gamme de 1:2,5 à 1:5.

11. Procédé selon la revendication 10, dans lequel les étapes a à d du procédé sont réalisées sous une atmosphère d'azote.

12. Procédé selon la revendication 11, dans lequel le rapport en masse entre la saumure (18) et l'aliment saumuré (16) après scellement (52) est d'environ 1:4.

13. Procédé selon une des revendications 10 à 12, dans lequel la pasteurisation (56) du récipient (10) est effectuée en transportant le récipient (10) à travers un pasteurisateur à tunnel.

14. Procédé selon un des revendications 10 à 13, dans lequel pendant l'étape de pasteurisation (56), le récipient (10) est maintenu à une température de pasteurisation pendant une période de pasteurisation et la durée de la période de pasteurisation n'est pas supérieure à deux minutes.
